# EUROPÄISCHE PATENTANMELDUNG

(11) **EP 1 191 606 A2**
(43) Veröffentlichungstag der Anmeldung: **27.03.2002**
(21) Anmeldenummer: 01250339.7
(22) Anmeldetag: 26.09.2001
(51) Int. Cl.: H01L 31/048, E04D 13/18

(54) **Solar-Dacheindeckungselement**

(30) Priorität: 26.09.2000 DE 10048032
(71) Anmelder: Zenit Energietechnik GmbH, 12459 Berlin (DE)
(72) Erfinder: Kalberlah, Klaus, 12459 Berlin (DE)
(74) Vertreter: Goesch, Wilfried H.

(57) **Zusammenfassung**

Solar-Dacheindeckungselemente sind unter der Bezeichnung "BIPV-Dachlemente" bekannt. Dabei werden glas- und rahmenlose, flexible sogenannte "Solar-Laminate" auf oberflächenvergütetes oder lackiertes Stahlblech unter Verwendung einer EVA-Schmelzklebefolie auf einem Heiztisch bei etwa 130 °C "aufvulkanisiert" (Bonding).

Werden die Solar-Laminate (1) mittels zweier Klebstoffschichten (3) und einer zwischen diese eingelegten Metallfolie (4), letztere aus dem gleichen Material wie das Substrat der Solar-Laminate (1) bestehend, mit dem Blech (2) verklebt, so sind die Solar-Laminate auch für die Verlegung auf NE-Metall-Blechen, die den Großteil von Blech-Dacheindeckungen ausmachen, geeignet.

## Beschreibung

Die Erfindung betrifft ein Solar-Dacheindeckungselement, bestehend aus flexiblen Solar-Laminaten, die mit einer Dacheindeckung aus Blech verklebt sind, wobei die Solar-Laminate aus einer Einbettung von Solarzellen, hergestellt nach einer Dünnschicht-Technologie durch Abscheiden auf einem flexiblen Substrat, bestehen.

Derartige Dacheindeckungselemente sind unter der Bezeichnung "BIPV-Dachlemente" bekannt. Dabei werden glas- und rahmenlose, flexible sogenannte "Solar-Laminate" auf oberflächenvergütetes oder lackiertes Stahlblech unter Verwendung einer EVA-Schmelzklebefolie auf einem Heiztisch bei etwa 130 °C "aufvulkanisiert" (Bonding). Das Verfahren gewährleistet eine mindestens 20-jährige Haltbarkeit der Verklebung, ohne dass die äußerst empfindlichen solarstromerzeugenden Halbleiterschichten im Inneren des Solar-Laminates beispielsweise durch Feuchtigkeit, die im Gebrauch als Dacheindeckung witterungsbedingt durch entstehende Mikrorisse in das Solar-Laminat eindringen könnte, in ihrer Funktion beeinträchtigt werden.

Als Material für die Dachscharen kann aus dem folgenden Grund nur Stahlblech Verwendung finden: Die vom Laminathersteller benutzte EVA-Schmelzklebefolie ist ein Duromer, d.h. es entseht durch den "bonding"-Prozeß beim Verkleben eine unelastische Verbindung zwischen dem flexiblen Laminat und dem Dachblech. Laminat und Dachblech müssen deshalb den gleichen Ausdehnungkoeffizienten aufweisen. Der Ausdehnungskoeffizient des Laminats wird bestimmt durch das verwendete Substrat, auf das das Dünschicht-Silizium aufgedampft ist, wobei derzeit allein Laminate angeboten werden, bei denen eine Edelstahlfolie als Substrat verwendet wird. In absehbare Zeit denkbar ist jedoch auch die Verwendung von Kupferfolien oder anderen Werkstoffen. Ein unterschiedlicher Ausdehnungskoeffizient könnte bei der üblichen Temperaturbeanspruchung von Dächern mit dunkler Oberfläche (minus 20 bis plus 85°C) zur Beschädigung des starr verbundenen Laminats führen, beispielsweise durch die Bildung der oben bereits erwähnten Mikrorisse.

Eine Verklebung dieser Solar-Laminate auf Dacheindeckungen aus NE-Metallen, z.B. Zink, Kupfer oder Aluminium nach demselben Klebeverfahren verbietet sich somit, weil der Ausdehnungskoeffizient derartiger Dacheindeckungsmaterialien von dem der Solar-Laminate deutlich verschieden ist.

Über 80 % der Dacheindeckungen, soweit diese metallische Bleche verwenden, bestehen jedoch nicht aus Stahl, sondern aus Zink bzw. Titan-Zink, Kupfer oder Aluminium. Es wäre deshalb wünschenswert, auch derartige Untergrundmaterialien mit flexiblen Solar-Laminaten beschichten zu können.

Ein weiteres Problem der bekannten BIPV-Dachelemente besteht darin, dass diese Strom erzeugen, sobald sie dem Tageslicht ausgesetzt sind. Ihre Montage erfordert also, ebenso wie die normaler Solarmodule, zumindest bei der üblichen Reihenschaltung von Modulen auf höhere Spannungen entsprechend den gültigen Vorschriften eine Lizenz als Elektrofachbetrieb bzw. entsprechende Fachkenntnisse. In verschiedenen Publikationen über die Montage von Solarstrommodulen wird vorgeschlagen, die Module während der Montage aus diesem Grund mit Decken gegen die Tageshelligkeit abzuschirmen und so an der Erzeugung potentiell gefährlicher Spannungen und Ströme zu hindern. Dass eine solche Vorgehensweise für den normalen Dachdecker, der üblicherweise nicht dem Elektrohandwerk angehört, bei der Eindeckung von Gebäuden mit Blech und neuerdings nun eben mit solaren Dachblech-Elementen schlechterdings unmöglich ist, liegt auf der Hand.

Die Erfindung hat es sich zur Aufgabe gemacht, einen Aufbau der Verklebung anzugeben, der auch für NE-Metalle geeignet ist. Zugleich soll eine gute Wärmeableitung aus dem Solar-Laminat in das Blech-Trägermaterial hinein erreicht werden. Die Erfindung hat sich zugleich auch noch das Ziel gesetzt, die Stromerzeugung bis zur Fertigstellung des Daches und dem Eintreffen des Elektrikers praktikabel zu unterbinden.

Die Aufgabe wird erfindungsgemäß gelöst durch die Merkmale im kennzeichnenden Teil des Anspruchs 1 im Zusammenwirken mit den Merkmalen im Oberbegriff. Zweckmäßige Ausgestaltungen der Erfindung sind Gegenstand der Unteransprüche.

Danach sind die Solar-Laminate mittels zweier Klebstoffschichten, vorzugsweise mittels Schmelzklebstoffschichten und einer zwischen diese eingelegten Metallfolie mit dem Blech verklebt. Zweckmäßig liegen die Schmelzklebstoffschichten in Form von Schmelzklebefolien vor, die mit der Metallfolie heißverklebt werden. Die Metallfolie besteht aus dem gleichen Material wie das metallische Substratmaterial des Laminats. Als "Blech" kann auch eine Unterlage aus einem Netzgittergeflecht oder Streckmetall benutzt werden. Bei Verwendung von letzteren können die Schmelzklebeschichten gegebenenfalls durch eine einzige Klebefolie hergestellt werden, da der erwärmte Schmelzkleber sich durch die Gitterlöcher hindurchdrückt.

Bei der Bestrahlung der Dachlaminate an einem warmen und hellen Sommertag werden auch in Mitteleuropa durchaus Temperaturen von bis zu 85°C erreicht, was die Stromausbeute der Solarzellen vermindert. Die Wärme wird nach einer bevorzugten Ausführungsform der Erfindung jedoch zur Kühlung/Leistungserhöhung nicht nur über das Dachblech abgeführt, sondern wird auch noch durch Kollektorröhren, die rückseitig an den Dachelementen wärmeleitend anliegen, abgeleitet und als solare Wärmeenergie dem Gesamtenergiebedarf des betreffenden Gebäudes zugeführt. Die Erfindung verzichtet daher auf eine Verklebung mit dauerelastischen Materialien, da diese in aller Regel nicht wärmeleitend sind und zwar das Problem des unterschiedlichen Ausdehnungskoeffizienten, nicht aber die Frage der Wärmeableitung lösen würden.

In weiterer erfindungsgemäßer Ausgestaltung kann die Unterseite des Bleches bereits werksseitig mit einer Wärmeisolierung versehen werden.

Die Verhinderung ungewollter Stromerzeugung wird erreicht, indem sonnenseitig die fertigen, verklebten Dachelemente mit einer lichtundurchlässigen Schutzfolie, die später rückstandslos abgezogen werden kann, abgeklebt wird. Diese spezielle Schutzfolie erfüllt zugleich die üblichen Forderungen eines mechanischen Schutzes gegen Beschädigung der empfindlichen Solar-Laminate beim Transport und der Montage, wie auch die Aufgabe, eine unerwünschte Stromerzeugung zu verhindern.

Die Erfindung soll nachstehend anhand eines Ausführungsbeispiels näher erläutert werden. In den zugehörigen Zeichnungen zeigen
- Fig. 1: die erfindungsgemäße Verklebung eines Laminates mit einer Dachschare,
- Fig. 2: die bekannte Heißverklebung von Laminaten,
- Fig. 3: eine Variante der erfindungsgemäßen Dachschare mit zusätzlicher Gewinnung von Warmwasser und
- Fig. 4: eine Variante der Dachschare gemäß Fig. 3.

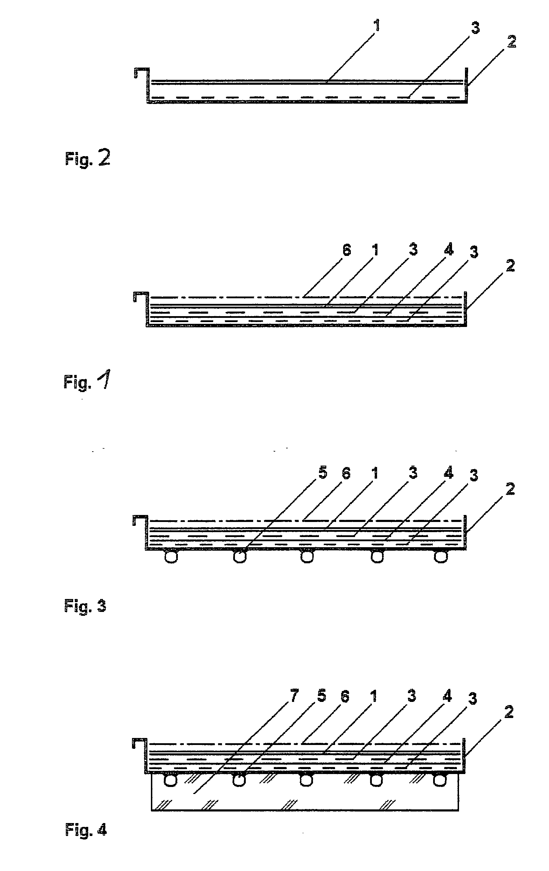

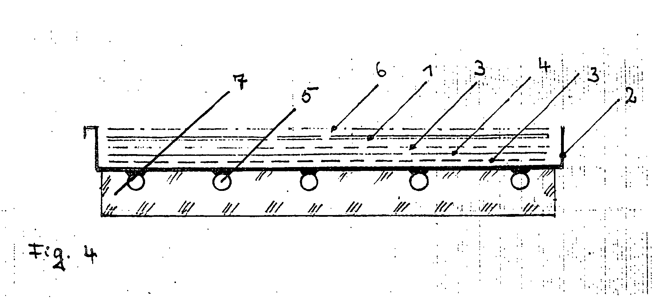

Fig. 2 zeigt die übliche Heißverklebung von Laminaten auf Stahlblech. Das Solar-Laminat 1 besteht aus den beim Hersteller zwischen einer Teflon- und einer PE-Folie eingebetteten flexiblen Solarzellen aus dünnem Edelstahl mit aufgedampftem Solar-Silizium. Die sog. "Dachschare" 2 ist ein bis zu 8 m langes Stahlblechprofil mit 40 - 50 cm Breite. Die Lackierung oder ein eventueller, zusätzlicher Oberflächenschutz sind im vorliegenden Beispiel nicht eingezeichnet. Zwischen dem Solar-Laminat 1 und der Dachschare 2 wird eine Schmelzklebefolie 3 eingebracht.

Fig. 1 zeigt die erfindungsgemäße Verklebung, ebenfalls im Herstellerwerk der Dacheindeckung bei ca. 130 °C auf einem Heiztisch unter Verwendung von zwei Schmelzklebefolien 3 aus EVA mit einer zwischengelegten Edelstahlfolie 4 von beispielsweise 0,4 mm Dicke in derselben Größe wie das Solar-Laminat 1. Es kann sich hierbei auch um ein Netzgittergeflecht aus Edelstahl oder sog. "Streckmetall" handeln. Edelstahl ist aus Gründen des Korrosionsschutzes vorzuziehen. Eine mögliche Oberflächenvergütung des eigentlichen Dachbleches aus NE-Metall, das heißt der ches aus NE-Metall, das heißt der Dachschare 2 ist wiederum nicht eingezeichnet. Die Oberfläche des Solar-Laminats 1 ist mit einer abziehbaren Lichtschutzfolie 6 beklebt, die rückstandsfrei abgezogen werden kann. Somit kann mit den Laminaten gefahrlos hantiert werden, solange sie noch nicht verschaltet sind.

Fig. 3 zeigt die Kombination zwischen einer Dachschare 2 aus NE-Metall einer oberseitigen, wärmeleitenden Verklebung gemäß Fig. 2 und die unterseitige Anbringung von Röhren 7 zur Ableitung von solar erwärmten Wasser. Die wärmeleitende Verbindung zwischen den Röhren 7 und der Dachschare 2 kann im Fall von Kupferblech und Kupfer für die Röhren 7 konventionell durch Löten erfolgen, jedoch kommen auch wärmeleitende Klebstoffe oder mechanische Anpress-Techniken infrage. Auch ist die Verwendung von Kunststoff-Rohren (z.B. PE wie für Fußbodenheizungen) nicht ausgeschlossen, weil ein rascher Wärmeeintrag nicht erforderlich ist.

Eine weitere Ausführungsform nach Fig. 4 zeigt die Integration eines weiteren Konstruktionselements von Dächern: lt. Wärmeschutzverordnung ist unter der eigentlichen Dachhaut eine Isolation, beispielsweise aus PV-Schaum oder Steinwolle, anzuordnen. Diese Isolation 7 ist nach dieser Ausführungsform unterseitig auf die Dachschare 2 bereits werksseitig aufgebracht. Somit wird erreicht, dass vier bisher getrennte "Gewerke"
- Solartrommodule
- Dacheindeckung
- Solarthermische Kollektoren
- Dachisolation
werkseitig in einem einzigen Bauelement zusammengefasst und in einem einzigen Arbeitsgang am Bau montiert werden. Die ggf. zusammen mit der Isolation 7 eingebrachte Dampfsperre ist in der Zeichnung nicht gezeigt. Ebenfalls zeichnerisch nicht erfasst sind die Steckverbindungen, mit welchen die kompletten Dachelemente elektrisch und hydraulisch zusammengefügt werden. Für diesen Zweck stehen Stecker- und Kupplungssysteme für Elektrizität und Warmwasser am Markt in geeigneter Form zur Verfügung.

### Bezugszeichenliste

- 1: Solar-Laminat
- 2: Dachschare
- 3: Schmelzklebefolie
- 4: Edelstahlfolie
- 5: Röhren
- 6: Schutzfolie
- 7: Isolation

## Patentansprüche

1. Solar-Dacheindeckungselement, bestehend aus flexiblen Solar-Laminaten (1), die mit einer Dacheindeckung aus Blech (2) verklebt sind, wobei die Solar-Laminate (1) aus einer Einbettung von Solarzellen, hergestellt nach einer Dünnschicht-Technologie durch Abscheiden auf einem flexiblen Substrat, bestehen,
**dadurch gekennzeichnet, dass**
die Solar-Laminate (1) mittels zweier Klebstoffschichten (3) und einer zwischen diese eingelegten Metallfolie (4), letztere aus dem gleichen Material wie das Substrat der Solar-Laminate (1) bestehend, mit dem Blech (2) verklebt sind.

2. Solar-Dacheindeckungselement nach Anspruch 1,
**dadurch gekennzeichnet, dass**
die Klebstoffschichten aus einem Schmelzklebstoff bestehen.

3. Solar-Dacheindeckungselement nach Anspruch 1 oder 2,
**dadurch gekennzeichnet, dass**
die Metallfolie (4) eine Edelstahlfolie ist.

4. Solar-Dacheindeckungselement nach einem der Ansprüche 1 bis 3,
**dadurch gekennzeichnet, dass**
die Schmelzklebstoffschichten (3) EVA-Schmelzklebefolien sind.

5. Solar-Dacheindeckungselement nach einem der Ansprüche 1 bis 4,
**dadurch gekennzeichnet, dass**
das Blech (2) aus einem Netzgittergeflecht besteht.

6. Solar-Dacheindeckungselement nach einem der Ansprüche 1 bis 4,
**dadurch gekennzeichnet, dass**
das Blech (2) eine Streckmetalltafel ist.

7. Solar-Dacheindeckungselement nach einem oder mehreren der vorhergehenden Ansprüche,
**dadurch gekennzeichnet, dass**
an der Unterseite des Bleches (2) wasserdurchströmte Röhren (5) zur Aufnahme von Wärmeenergie angebracht sind.

8. Solar-Dacheindeckungselement nach einem oder mehreren der vorhergehenden Ansprüche,
**dadurch gekennzeichnet, dass**
auf die Unterseite des Bleches (2) wärmeisolierendes Material aufgebracht ist.

9. Solar-Laminat nach einem oder mehreren der vorhergehenden Ansprüche,
**dadurch gekennzeichnet, dass**
die lichtempfindliche Außenseite der Solar-Laminate (1) mit einer lichtundurchlässigen, nach der mechanischen und elektrischen Montage abziehbaren Schutzfolie (6) versehen ist.
